# EUROPÄISCHE PATENTSCHRIFT

(11) **EP 3 930 965 B1**
(45) Veröffentlichungstag und Bekanntmachung des Hinweises auf die Patenterteilung: **19.04.2023**
(21) Anmeldenummer: 20702995.0
(22) Anmeldetag: 30.01.2020
(51) Int. Cl.: B25J 9/16, A43D 13/00, B25J 11/00, B25J 13/08

(54) **VERFAHREN ZUM AUTOMATISCHEN AUFZIEHEN EINES SCHUHSCHAFTES AUF EINEN LEISTEN**
METHOD FOR AUTOMATICALLY PULLING A SHOE UPPER ONTO A LAST
PROCÉDÉ PERMETTANT LE MONTAGE AUTOMATIQUE D'UNE TIGE DE CHAUSSURE SUR UN EMBAUCHOIR

(30) Priorität: 25.02.2019 DE 102019202515
(43) Veröffentlichungstag der Anmeldung: 05.01.2022
(73) Patentinhaber: KUKA Deutschland GmbH, 86165 Augsburg (DE)
(72) Erfinder: BAUMANN, Benjamin, 86150 Augsburg (DE); LANDHERR, Johannes, 86153 Augsburg (DE)
(74) Vertreter: Oelke, Jochen
(86) Internationale Anmeldenummer: PCT/EP2020/052254
(87) Internationale Veröffentlichungsnummer: WO 2020/173653

(56) Entgegenhaltungen:
- WO-A1-2018/154438
- JP-U- S5 934 604
- SU-A1- 1 192 775
- US-A1- 2018 129 185
- US-A1- 2018 325 219

## Beschreibung

Die Erfindung betrifft ein Verfahren zum automatischen Aufziehen eines Schuhschaftes auf einen Leisten mittels eines Roboters, der eine Robotersteuerung, einen von der Robotersteuerung automatisch angesteuerten Roboterarm, sowie ein von dem Roboterarm bewegten Greifer umfasst, der ausgebildet ist, einen Schuhschaft zu halten.

Aus der DE 10 2013 221 020 A1 ist ein Verfahren zur Herstellung eines Schuhs bekannt, welches die Schritte umfasst des Bereitstellens einer dreidimensional vorgeformten ersten Schuhkomponente und des Bearbeitens der dreidimensional vorgeformten ersten Schuhkomponente, wobei das Bearbeiten eine steuerbare Abfolge von Bearbeitungsschritten umfasst.

Die US 2018/129185 A1 offenbart ein Verfahren zur automatischen Herstellung eines Schuhs und insbesondere zum Greifen eines Schuhschafts mittels eines Roboters.

Aufgabe der Erfindung ist es, ein Verfahren zum automatischen Aufziehen eines Schuhschaftes auf einen Leisten mittels eines Roboters zu schaffen.

Die Aufgabe wird erfindungsgemäß gelöst durch ein Verfahren zum automatischen Aufziehen eines Schuhschaftes auf einen Leisten mittels eines Roboters, der eine Robotersteuerung, einen von der Robotersteuerung automatisch angesteuerten Roboterarm, sowie ein von dem Roboterarm bewegten Greifer umfasst, der ausgebildet ist, einen Schuhschaft zu halten, aufweisend die Schritte:
- Aufnehmen des Schuhschaftes durch den vom Roboterarm geführten Greifer, derart, dass der Greifer den Schuhschaft festhält,
- Aufziehen des vom Greifer festgehaltenen Schuhschaftes auf den Leisten durch kraft-/momentgeregeltes Bewegen des Greifers durch motorisches Ansteuern der Gelenke des Roboterarms derart, dass der Schuhschaft beginnend an dem Zehenende des Leistens in Richtung dem Fersenende des Leistens in Längserstreckung des Leistens mit einer vorgegebenen maximalen Zugkraft aufgezogen wird, wobei
- die Robotersteuerung die Gelenke des Roboterarms derart ansteuert, dass zumindest während eines Teilabschnitts des Aufziehens des Schuhschaftes in Längserstreckung des Leistens der Schuhschaft mit einer zumindest im Wesentlichen senkrecht auf die Sohlenfläche des Leistens wirkenden Andruckkraft auf den Leisten angedrückt wird, und
- während des Aufziehens und Andrückens des Schuhschaftes in Längserstreckung des Leistens der Schuhschaft unter Verhinderung der Entstehung und des Ausübens von Querkräften durch kraft-/momentgeregeltes Bewegen auf den Leisten in Längserstreckung des Leistens aufgezogen wird, bis das Fersenteil des Schuhschaftes über die Übergangskante von Sohlenfläche des Leistens zu Fersenfläche des Leistens hinweggleitet, und
- die Robotersteuerung, nach dem Hinweggleiten des Fersenteils des Schuhschaftes über die Übergangskante des Leistens, die Gelenke des Roboterarms derart verändert ansteuert, dass die bisherige vom Zehenende des Leistens in Richtung dem Fersenende des Leistens in Längserstreckung wirkende Zugkraft in eine in entgegengesetzte Richtung wirkende Druckkraft verändert wird, die den Schuhschaft gegen die Fersenfläche des Leistens drückt, während gleichzeitig das Fersenteil des Schuhschaftes entlang des Fersenendes des Leistens aufgezogen wird, bis der Schuhschaft vollständig auf dem Leisten aufsitzt.

Die Erfindung befasst sich mit einem Teilaspekt der Herstellung von Schuhen, insbesondere Sportschuhen. Ausgangspunkt des erfindungsgemäßen Verfahrens ist ein bereits vorgefertigter Schuhschaft. Unter einem Schuhschaft wird der Oberteil eines Schuhes verstanden, also insoweit der Schuh ohne Sohle. Der Schuhschaft umfasst insoweit zumindest einen Außenschaft, einen Innenschaft, einer Vorderkappe, welche den Zehenbereich definiert und eine Hinterkappe, welche den Fersenteil definiert. Der Schuhschaft kann insoweit auch bereits eine Lasche, d.h. Zunge und ggf. einen Schnürsenkel, d.h. ein Schnürband oder Schuhband umfassen.

Bevor im Rahmen der Herstellung eines Schuhes eine Sohle auf den Schuhschaft aufgebracht werden kann, wird im Allgemeinen der Schuhschaft auf einen Leisten aufgezogen und auf dem Leisten aufsitzend der Schuhschaft dann mit der Sohle versehen. Dazu kann die Sohle separat hergestellt werden und beispielsweise mit der Unterseite des Schuhschaftes verklebt werden. Alternativ kann die Sohle durch unmittelbares Anformen einer (Kunststoff-)Sohle an den Schuhschaft angebracht werden.

Die Erfindung befasst sich mit dem Teilvorgang des automatischen Aufziehens des Schuhschaftes auf einen Leisten, so dass der Schuhschaft zu einem dem erfindungsgemäßen Verfahren folgenden Schritt des Aufbringens der Sohle vorbereitet ist. Die Erfindung hat sich zur Aufgabe gemacht, den Vorgang des Aufziehens des Schuhschaftes auf einen Leisten automatisch mittels eines Roboters durchzuführen. Damit dies gelingt beschreibt die Erfindung einzelne Schritte, die notwendig und/oder vorteilhaft sind, damit der Schuhschaft nach Abschluss des Verfahrens lagerichtig, verzugsfrei und/oder spannungsfrei in der gewünschten genauen Position auf dem Leisten zu liegen kommt. Von Bedeutung ist dabei auch, dass eine solche genaue Positionierung für eine Vielzahl von gleichartigen Schuhschäfte reproduzierbar, d.h. wiederholgenau automatisch ausgeführt werden kann. Die genaue Positionierung, insbesondere eine lagerichtige, verzugsfreie und/oder spannungsfreie Positionierung ist wichtig, damit alle gefertigten Schuhe einer Schuhart zumindest weitgehend oder sogar exakt genau gleich aussehen, es also hinsichtlich Symmetrie des optischen Erscheinungsbildes und/oder hinsichtlich der inneren Formgebung nur möglichst geringe oder sogar gar keine Abweichungen gibt.

Das Aufnehmen des Schuhschaftes kann automatisch insbesondere dadurch erfolgen, dass der Roboter mittels des Greifers einen einzelnen, ausgewählten Schuhschaft beispielsweise aus einem Lagerbehälter, wie einer Kiste selbsttätig herausgreift, indem beispielsweise die Robotersteuerung ausgebildet und eingerichtet ist, mittels Sensoren einen einzelnen Schuhschaft aus mehreren in dem Lagerbehälter vorhandenen Schuhschäfte zu selektieren, dessen Position und Orientierung in dem Lagerbehälter zu bestimmen und den selektierten Schuhschaft mittels des Greifers klemmend zu erfassen, so dass der Schuhschaft durch eine Bewegung des Roboterarms aus dem Lagerbehälter entnommen werden kann. Dazu können dem Fachmann an sich bekannte Algorithmen der Strategie "Griff in die Kiste" verwendet werden. Ein solches System kann neben dem Roboterarm, dem beschriebenen Greifer und dem beschriebenen Kraft-/Momentensensor beispielsweise auch eine optische Sensorik, wie eine Kamera aufweisen, die mit einer Bildverarbeitung zusammenwirkt.

Ein kraft-/momentgeregeltes Bewegen des Greifers kann automatisch insbesondere dadurch erfolgen, dass zwischen dem Flansch des Roboterarms und dem Greifer ein insbesondere mehrdimensional erfassender Kraft-/Momentensensor angeordnet ist, welcher die am Greifer einwirkenden bzw. vom Greifer auf den Roboterarm zu übertragenden Kräfte und/oder Momente erfasst und diese erfassten Kräfte und/oder Momente insbesondere durch die Robotersteuerung ausgewertet werden und die Bewegungen des Greifers in Abhängigkeit der erfassten Kräfte und/oder Momente durch den Roboterarm bewegt wird. Der Kraft-/Momentensensor kann einen einzelnen, mehrdimensional erfassenden Sensor aufweisen. Alternativ kann der Kraft-/Momentensensor aus einer Gruppe von mehreren Einzelsensoren gebildet werden, von denen jeder Einzelsensor beispielsweise nur eine einzige Kraft oder ein einziges Moment eindimensional erfasst.

In einer alternativen Ausgestaltung kann das Verfahren auch ohne einen speziellen, d.h. separaten Kraft-/Momentensensor durchgeführt werden und zwar insbesondere dann, wenn der Roboterarm selbst als ein kraft-/momentgeregelter Roboterarm ausgebildet ist. Dabei kann jedem Gelenk des Roboterarms beispielsweise ein eigener Kraft-/Momentensensor zugeordnet sein, der jeweils nur die Kräfte bzw. das Drehmoment an diesem zugordneten Gelenk des Roboterarms erfasst. Die Robotersteuerung kann dabei eingerichtet sein den Roboterarm in einer Admittanzregelung oder in einer Impedanzregelung anzusteuern.

Die vorgegebene maximale Zugkraft wird in der Robotersteuerung als ein Randwert vorgegeben. Die vorgegebene maximale Zugkraft kann in ihrem Wert abhängig sein vom Aufbau des Schuhschaftes und/oder der Materialart und/oder der Materialkombination des Schuhschaftes. Für jede Art von Schuhschaft kann insoweit eine unterschiedliche maximale Zugkraft vorgegeben sein. So können beispielsweise bei einem Aufziehen eines Schuhschaftes aus Leder höhere maximale Zugkräfte erlaubt sein, als dies beim Aufziehen eines Schuhschaftes aus einem Stoffgewebe, insbesondere aus einem elastisches Material aufweisenden Stoffgewebe möglich ist.

Erfindungsgemäß wurde festgestellt, dass der Schuhschaft genau dann lagerichtig, verzugsfrei und/oder spannungsfrei in der gewünschten genauen Position auf dem Leisten zu liegen kommt, wenn zumindest während eines Teilabschnitts des Aufziehens des Schuhschaftes in Längserstreckung des Leistens der Schuhschaft mit einer zumindest im Wesentlichen senkrecht auf die Sohlenfläche des Leistens wirkenden Andruckkraft auf den Leisten angedrückt wird. Ein solcher Teilabschnitt des Aufziehens kann insbesondere derjenige sein, während dem der Schuhschaft bereist etwa zur Hälfte auf den Leisten, d.h. dem Vorderfuß des Leistens aufgezogen ist, jedoch der Schuhschaft noch nicht über den Fersenabschnitt des Leistens übergezogen ist.

Um das automatische lagerichtige, verzugsfreie und/oder spannungsfreie Aufziehen des Schuhschaftes auf den Leisten zusätzlich sicherzustellen, ist erfindungsgemäß außerdem vorgesehen, dass während des Aufziehens und Andrückens des Schuhschaftes in Längserstreckung des Leistens der Schuhschaft unter Verhinderung der Entstehung und des Ausübens von Querkräften durch kraft-/momentgeregeltes Bewegen auf den Leisten in Längserstreckung des Leistens aufgezogen wird, bis das Fersenteil des Schuhschaftes über die Übergangskante von Sohlenfläche des Leistens zu Fersenfläche des Leistens hinweggleitet.

Unter einem Entstehen von Querkräften sollen erfindungsgemäß solle Kräfte verstanden werden, die aufgrund der ziehenden und/oder gleitenden automatischen Bewegung des Schuhschaftes entlang des Leistens durch gegenseitige Berührung entstehen oder entstehend könnten, und die zumindest weitgehend vermieden oder sogar vollständig verhindert werden sollen.

Unter einem Ausübens von Querkräften sollen erfindungsgemäß solle Kräfte verstanden werden, die aufgrund von aktiven Bewegungen des Greifers aufgrund von Gelenkbewegungen des Roboterarms auf den Schuhschaft übertragen werden oder übertragen werden könnten, und die zumindest weitgehend vermieden oder sogar vollständig verhindert werden sollen.

Um eine Entstehung und ein Ausüben von Querkräften zumindest weitgehend zu vermeiden oder sogar vollständig zu verhindern, kann der Roboterarm und mit dem Roboterarm der Greifer gewisse Ausgleichsbewegungen ausführen, um evtl. in der Entstehung befindende Querkräft durch die Ausgleichsbewegungen zu reduzieren oder ganz zu Null zu führen.

Als Querkräfte sind erfindungsgemäß diejenigen Kräfte zu verstehen, die bezogen auf die Längserstreckung des Leistens, d.h. ausgehend vom Zehenteil des Leistens zum Fersenteil des Leistens, zumindest im Wesentlichen oder genau in der Ebene der Sohlenfläche des Leistens liegen, aber in einem im Wesentlichen oder genau rechtwinkligen Richtung zur Längserstreckung des Leistens verlaufen.

Sobald der Schuhschaft mit seinem Fersenteil über die Fersenkante des Leistens übergeleitet ist, ist erfindungsgemäß außerdem vorgesehen, dass die bisherige vom Zehenende des Leistens in Richtung dem Fersenende des Leistens in Längserstreckung wirkende Zugkraft in eine in entgegengesetzte Richtung wirkende Druckkraft verändert wird, die den Schuhschaft gegen die Fersenfläche des Leistens drückt, während gleichzeitig das Fersenteil des Schuhschaftes entlang des Fersenendes des Leistens aufgezogen wird, bis der Schuhschaft vollständig auf dem Leisten aufsitzt.

Maßgeblich ist hierbei, dass während des Aufziehens des Fersenteils des Schuhschaftes auf die Fersenfläche des Leistens erfindungsgemäß keinerlei Zugkräfte in Längserstreckung des Leistens mehr wirken dürfen. Zweckmäßig ist es erfindungsgemäß insoweit die bisherige Zugkraft in eine zumindest geringfügige Druckraft zu ändern. Erfindungsgemäß begünstigt eine solche Druckraft dann auch das Aufziehen des Fersenteils des Schuhschaftes auf die Fersenfläche des Leistens bis der Schuhschaft vollständig auf dem Leisten aufsitzt und in dieser Endposition lagerichtig, verzugsfrei und/oder spannungsfrei in der gewünschten genauen Position auf dem Leisten aufsitzt.

Das Aufnehmen des Schuhschaftes durch den vom Roboterarm geführten Greifer kann dadurch erfolgen, dass die Robotersteuerung die Gelenke des Roboterarms automatisch derart ansteuert, dass der Roboterarm den Greifer an eine Hinterkappe des Schuhschaftes heranführt und der Greifer den Schuhschaft dadurch festhält, dass er die Hinterkappe des Schuhschaftes zwischen einer insbesondere automatisch verstellbaren Innenzunge des Greifers und einem am Außenhinterteil des Schuhschaftes anliegendem Gegenhalter des Greifers einklemmt.

Der Greifer kann einen L-förmigen Grundträger aufweisen, der einen kurzen Schenkel 1und einen dazu im rechten Winkel sich wegerstreckenden langen Schenkel aufweist. An dem kurzen Schenkel des Grundträgers kann sich eine Auflagefläche befinden, die ausgebildet ist, in einem vom Greifer gegriffenen Zustand des Schuhschaftes an einer Absatzfläche des Schuhschaftes bündig anzuliegen. Der lange Schenkel kann mit einem Kraft-/Momentensensor verbunden sein und der Kraft-/Momentensensor wiederum kann an dem Anschlussflansch des Roboterarms befestigt sein. An einer von dem Kraft-/Momentensensor gegenüberliegenden Seite des langen Schenkels kann der Grundträger eine schuhlöffelartige Innenzunge aufweisen. Die Innenzunge ist dabei ausgebildet, in einem vom Greifer gegriffenen Zustand des Schuhschaftes an der Innenseite der Hinterkappe des Schuhschaftes anzuliegen, so dass die Hinterkappe des Schuhschaftes in dem vom Greifer gegriffenen Zustand des Schuhschaftes zwischen dem langen Schenkel des Grundträgers und der Zunge eingeklemmt festgehalten ist.

Der Leisten, auf den der Schuhschaft aufgezogen wird, kann mit seiner Leistensohlenfläche nach oben weisend ortsfest angeordnet sein.

Der Leisten kann im Rahmen einer automatisierten Serienfertigung ein einzelner Leisten einer Vielzahl von weiteren Leisten sein, so dass im Rahmen der Serienfertigung mehrere Schuhschäfte auf mehreren Leisten aufgezogen sein können, um beispielsweise mehrere Schuhe gleichzeitig oder seriell in kurzen Zeitabständen hintereinander fertigen zu können.

Die vorgegebene maximale Zugkraft die während des Aufziehens des vom Greifer festgehaltenen Schuhschaftes auf den Leisten beginnend an dem Zehenende des Leistens in Richtung dem Fersenende des Leistens in Längserstreckung des Leistens höchstens ausgeübt wird, kann in Abhängigkeit des Aufbaus des Schuhschaftes und/oder der Materialart und/oder Materialkombination des Schuhschaftes vor dem Durchführen des Aufziehens empirisch vorbestimmt sein.

Die vorgegebene maximale Zugkraft, die während des Aufziehens des vom Greifer festgehaltenen Schuhschaftes auf den Leisten beginnend an dem Zehenende des Leistens in Richtung dem Fersenende des Leistens in Längserstreckung des Leistens höchstens ausgeübt wird, kann auf einen Wert zwischen 100 Newton und 250 Newton, insbesondere zwischen 150 Newton und 210 Newton festgelegt sein.

Das Aufziehen des vom Greifer festgehaltenen Schuhschaftes auf den Leisten in Längserstreckung des Leistens kann mit einer kontinuierlich ansteigenden Zugkraft bis höchstens zur vorgegebenen maximalen Zugkraft durchgeführt werden.

Nach Erreichen der vorgegebenen maximalen Zugkraft kann der vom Greifer festgehaltene Schuhschaft weiter auf den Leisten in Längserstreckung des Leistens aufgezogen werden und zwar mit einer konstanten Zugkraft in Höhe der vorgegebenen maximalen Zugkraft.

Während des Aufziehens des Schuhschaftes in Längserstreckung des Leistens kann der Schuhschaft mit einer zumindest im Wesentlichen senkrecht auf die Sohlenfläche des Leistens wirkenden Andruckkraft zwischen 5 und 15 Newton auf den Leisten angedrückt werden.

Der Schuhschaft kann zumindest während eines Teilabschnitts des Aufziehens des Schuhschaftes, welcher mindestens die der Fersenfläche des Leistens zugewandte halbe Länge der Längserstreckung des Leistens umfasst, mit einer zumindest im Wesentlichen senkrecht auf die Sohlenfläche des Leistens wirkenden Andruckkraft zwischen 5 und 15 Newton auf den Leisten angedrückt werden.

Während des Aufziehens und Andrückens des Schuhschaftes in Längserstreckung des Leistens kann ein Ausüben von Querkräften dadurch verhindert werden, dass durch kraft-/momentgeregeltes Ansteuern der Gelenke des Roboterarms durch die Robotersteuerung der Greifer ausschließlich in Längserstreckung des Leistens bewegt wird.

Während des Aufziehens und Andrückens des Schuhschaftes in Längserstreckung des Leistens kann ein Entstehen von Querkräften dadurch verhindert werden, dass durch kraft-/momentgeregeltes Ansteuern der Gelenke des Roboterarms durch die Robotersteuerung der Greifer in Querrichtung zur Längserstreckung des Leistens seitliche Ausweichbewegungen durchführt, um die Querkräfte zumindest im Wesentlichen auf Null zu reduzieren.

Das kraft-/momentgeregelte Bewegen kann durchgeführt werden, indem Messwerte eines zwischen dem Greifer und einem Flansch des Roboterarms angeordneten Kraft-/Momentensensor an die Robotersteuerung zur Auswertung zugeführt werden und die geplanten Bewegungen des Greifers in Abhängigkeit der Messwerte angepasst werden.

Statt eines zwischen dem Greifer und einem Flansch des Roboterarms angeordneten Kraft-/Momentensensors können in einer Abwandlung der Erfindung auch die Gelenkmomentsensoren eines kraft-/momentgeregelten Roboterarms verwendet werden, um als Messwerte die Gelenkmomente des kraft-/momentgeregelten Roboterarms verwenden zu können, wobei diese Messwerte der Gelenkmomente der Robotersteuerung zur Auswertung zugeführt werden und die geplanten Bewegungen des Greifers in Abhängigkeit dieser Messwerte angepasst werden.

Das Aufziehen des Fersenteils des Schuhschaftes entlang des Fersenendes des Leistens, bis der Schuhschaft vollständig auf dem Leisten aufsitzt, kann durchgeführt werden, indem die Robotersteuerung den Greifer in wenigstens zwei, insbesondere drei gerade verlaufenden Teilbewegungsstrecken entlang des Fersenendes des Leistens bewegt.

Durch das Bewegen des Greifers in wenigstens zwei, insbesondere drei gerade verlaufenden Teilbewegungsstrecken wird das Fersenteil des Schuhschaftes über das Fersenende des Leistens gezogen, bis der Schuhschaft vollständig auf dem Leisten aufsitzt. Dies kann zumindest hinsichtlich dieser Bewegungsrichtung wahlweise kraft-/momentgeregelt angesteuert erfolgen oder lediglich positionsgesteuert erfolgen, d.h. ohne Kraft-/Momentregelung.

Das Aufziehen des Fersenteils des Schuhschaftes entlang des Fersenendes des Leistens, bis der Schuhschaft vollständig auf dem Leisten aufsitzt, kann durchgeführt werden, indem die Robotersteuerung den Greifer in einer einzigen bogenförmig, insbesondere kreisbogenförmig verlaufenden Gesamtbewegungsstrecke entlang des Fersenendes des Leistens bewegt.

Durch das Bewegen des Greifers in einer einzigen bogenförmig, insbesondere kreisbogenförmig verlaufenden Gesamtbewegungsstrecke wird das Fersenteil des Schuhschaftes über das Fersenende des Leistens gezogen, bis der Schuhschaft vollständig auf dem Leisten aufsitzt. Dies kann zumindest hinsichtlich dieser Bewegungsrichtung wahlweise kraft-/momentgeregelt angesteuert erfolgen oder lediglich positionsgesteuert erfolgen, d.h. ohne Kraft-/Momentregelung.

Während des Aufziehens eines ersten Schuhschaftes auf den Leisten können die während des Aufziehens des ersten Schuhschaftes wirkenden Kräfte als Kraftwerte erfasst und gespeichert werden, wobei während eines folgenden Aufziehens eines weiteren Schuhschaftes auf den Leisten die gespeicherten Kraftwerte des Aufziehens des ersten Schuhschaftes mit aktuellen Kraftwerten, die während des Aufziehens des weiteren Schuhschaftes auf den Leisten gemessen werden, verglichen werden, und bei Überschreitung einer vorgegebenen Maximalabweichung von gespeicherten Kraftwerten zu aktuellen Kraftwerten, das Aufziehen abgebrochen wird.

Indem solche gespeicherten Kraftwerte als Sollwerte herangezogen werden und die Kraftwerte eines aktuellen Aufziehens gemessen und als Istwerte herangezogen werden, kann durch einen Vergleich von früheren Kraftwerten, d.h. den Sollwerten mit den aktuellen Kraftwerten, d.h. den Istwerten eine Abweichung insbesondere in den Kraftverläufen festgestellt werden und aus der Höhe einer solchen Abweichung entweder die Regelung des Roboterarms bei der Durchführung des Verfahren angepasst werden, um die Istwerte an die Sollwerte anzunähern, oder es kann bei einer signifikanten Überschreitung der Kraftwerte der Vorgang des Aufziehens abgebrochen, d.h. der Roboterarm angehalten werden und ein eine Störung anzeigendes Signal automatisch erzeugt und ausgegeben werden.

Ein konkretes Ausführungsbeispiel der Erfindung ist in der nachfolgenden Beschreibung unter Bezugnahme auf die beigefügten Figuren näher erläutert. Konkrete Merkmale dieses exemplarischen Ausführungsbeispiels können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine perspektivische Darstellung eines beispielhaften Roboterarms und einer den Roboterarm steuernden Robotersteuerung,
- Fig. 2: eine perspektivische Darstellung eines beispielhaften Leistens, auf den ein Schuhschaft aufgezogen wird, in einem ersten Zustand, in dem der Schuhschaft auf das Zehenende des Leistens aufgesetzt wird,
- Fig. 3: eine perspektivische Darstellung eines beispielhaften Leistens, auf den ein Schuhschaft aufgezogen wird, in einem zweiten Zustand, in dem der Schuhschaft in Längserstreckung entlang des Leistens aufgezogen wird,
- Fig. 4: eine perspektivische Darstellung eines beispielhaften Leistens, auf den ein Schuhschaft aufgezogen wird, in einem dritten Zustand, in dem der Schuhschaft während des Aufziehens mit einer Andruckkraft gegen die Sohlenfläche des Leistens angedrückt wird, und
- Fig. 5: eine perspektivische Darstellung eines beispielhaften Leistens, auf den ein Schuhschaft aufgezogen wird, in einem vierten Zustand, in dem das Fersenteil des Schuhschafts über das Fersenende des Leistens gezogen ist.

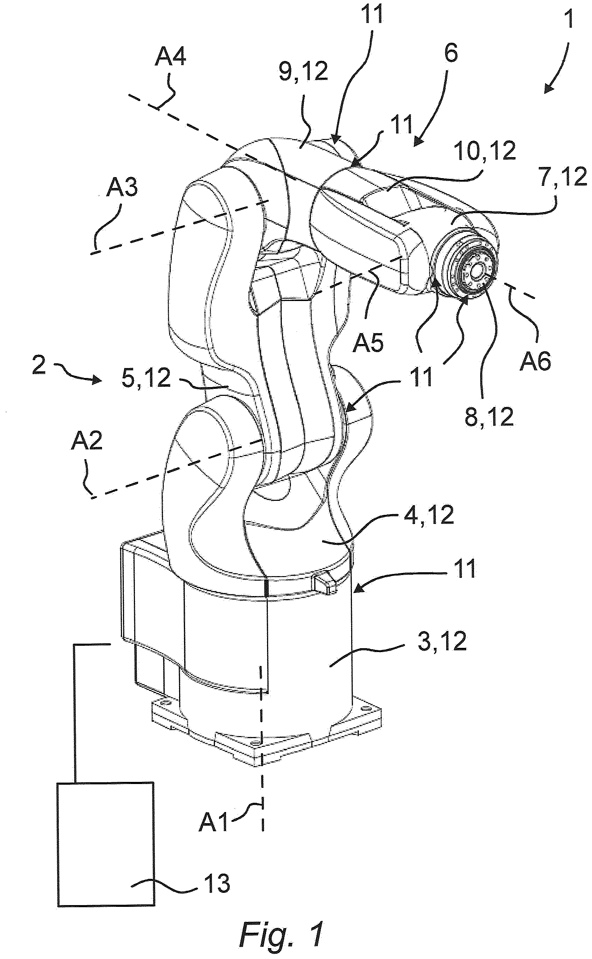

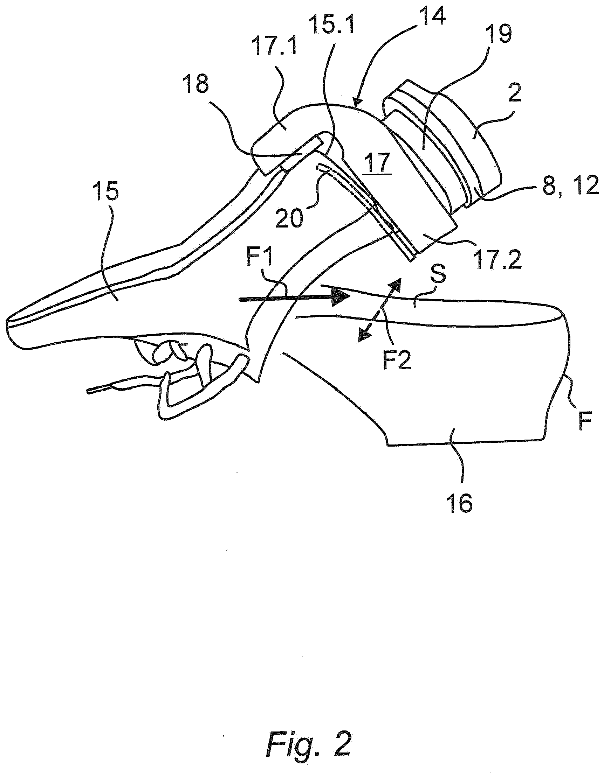

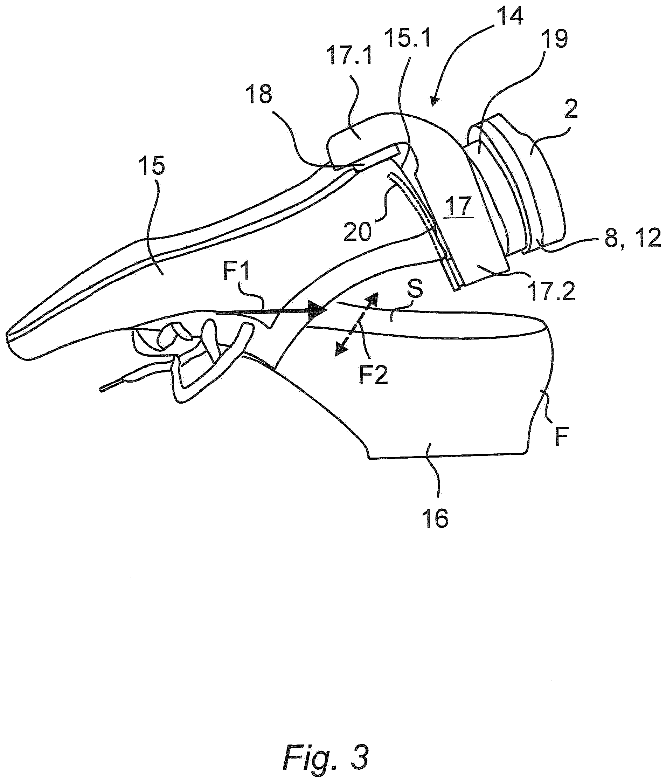

Die Fig. 1 zeigt einen Roboter 1, der einen Roboterarm 2 und eine Robotersteuerung 13 aufweist. Der Roboterarm 2 umfasst im Falle des vorliegenden Ausführungsbeispiels mehrere, nacheinander angeordnete und mittels Gelenke 11 verbundene Glieder 12. Bei den Gliedern 12 handelt es sich insbesondere um ein Grundgestell 3 und ein relativ zum Gestell 3 um eine vertikal verlaufende Drehachse A1 drehbar gelagertes Karussell 4. Die Schwinge 5 ist am unteren Ende z.B. an einem nicht näher dargestellten Schwingenlagerkopf auf dem Karussell 4 um eine vorzugsweise horizontale Drehachse A2 schwenkbar gelagert. Am oberen Ende der Schwinge 5 ist wiederum um eine ebenfalls vorzugsweise horizontale Drehachse A3 der Armausleger 6 schwenkbar gelagert. Dieser trägt endseitig eine Roboterhand 7 mit ihren vorzugsweise drei Drehachsen A4, A5, A6. Der Armausleger 6 weist im Falle des vorliegenden Ausführungsbeispiels einen schwenkbar an der Schwinge 5 gelagerten Grundarm 9 auf. An dem Grundarm 9 ist ein Vorderarm 10 des Armauslegers 6 um die Drehachse A4 drehbar gelagert. Weitere Glieder des Roboterarms 2 sind im Falle des vorliegenden Ausführungsbeispiels neben dem Grundgestell 3, dem Karussell 4, der Schwinge 5 und dem Grundarm 9, außerdem die Glieder 12 der vorzugsweise mehrachsigen Roboterhand 7 mit einer als Anschlussflansch 8 ausgeführten Befestigungsvorrichtung zum Befestigen eines Greifers 14 für einen Schuhschaft 15, wie dies in den Figuren 2 bis 5 näher gezeigt und im Folgenden erläutert ist..

Der den Greifer 14 bewegende Roboterarm 2, welcher den Schuhschaft 15 auf einen Leisten 16 automatisch aufzieht, weist im Falle des vorliegenden Ausführungsbeispiels demgemäß das Grundgestell 3 auf, das am Grundgestell 3 mittels eines ersten Gelenks 11 des Roboterarms 2 um eine erste Drehachse A1 drehbar gelagertes Karussell 4, die am Karussell 4 mittels eines zweiten Gelenks 11 des Roboterarms 2 um eine zweite Drehachse A2 schwenkbar gelagerte Schwinge 5, den an der Schwinge 5 mittels eines dritten Gelenks 11 des Roboterarms 2 um eine dritte Drehachse A3 drehbar gelagerten Grundarm 9, und die am Grundarm 9 gelagerte, mehrachsige Roboterhand 7.

Der Greifer 14, welches am Anschlussflansch 8 des Roboterarms 2 angeordnet ist, weist im Falle des vorliegenden Ausführungsbeispiels einen L-förmigen Grundträger 17 auf, der einen kurzen Schenkel 17.1 und einen dazu im rechten Winkel sich wegerstreckenden langen Schenkel 17.2 aufweist. An dem kurzen Schenkel 17.1 des Grundträgers 17 befindet sich eine Auflagefläche 18, die ausgebildet ist in einem vom Greifer gegriffenen Zustand des Schuhschaftes 15 an einer Absatzfläche des Schuhschaftes 15 bündig anzuliegen. Der lange Schenkel 17.2 ist mit einem Kraft-/Momentensensor 19 verbunden und der Kraft-/Momentensensor 19 wiederum ist an dem Anschlussflansch 8 des Roboterarms 2 befestigt. An einer von dem Kraft-/Momentensensor 19 gegenüberliegenden Seite des langen Schenkels 17.2 weist der Grundträger 17 eine schuhlöffelartige Innenzunge 20 auf. Die Innenzunge 20 ist ausgebildet, in einem vom Greifer gegriffenen Zustand des Schuhschaftes 15, an der Innenseite der Hinterkappe 15.1 des Schuhschaftes 15 anzuliegen, so dass die Hinterkappe 15.1 des Schuhschaftes 15 in dem vom Greifer gegriffenen Zustand des Schuhschaftes 15 zwischen dem langen Schenkel 17.2 des Grundträgers 17 und der Zunge 20 eingeklemmt festgehalten ist.

Das erfindungsgemäße Verfahren dient zum automatischen Aufziehen des Schuhschaftes 15 auf den Leisten 16 mittels des Roboters 1, der die Robotersteuerung 13, den von der Robotersteuerung 13 automatisch angesteuerten Roboterarm 2, sowie den von dem Roboterarm 2 bewegten Greifer 14 umfasst, der wie oben beispielhaft beschrieben, ausgebildet ist, den Schuhschaft 15 zu halten.

Wie durch die Fig. 2 veranschaulicht, erfolgt zunächst ein Aufnehmen des Schuhschaftes 15 durch den vom Roboterarm 2 geführten Greifer 14, derart, dass der Greifer 14 den Schuhschaft 15 festhält. Anschließend erfolgt ein Aufziehen des vom Greifer 14 festgehaltenen Schuhschaftes 15 auf den Leisten 16 durch kraft-/momentgeregeltes Bewegen des Greifers 14 durch motorisches Ansteuern der Gelenke 11 des Roboterarms 2 derart, dass der Schuhschaft 15 beginnend an dem Zehenende des Leistens 16 in Richtung dem Fersenende des Leistens 16 in Längserstreckung des Leistens 16 mit einer vorgegebenen maximalen Zugkraft F1 aufgezogen wird.

Dabei werden durch die Robotersteuerung 13 die Gelenke 11 des Roboterarms 2 derart angesteuert, dass zumindest während eines Teilabschnitts des Aufziehens des Schuhschaftes 15 in Längserstreckung des Leistens 16 der Schuhschaft 15 mit einer zumindest im Wesentlichen senkrecht, d.h. in Pfeilrichtung P1 auf die Sohlenfläche S des Leistens 16 wirkenden Andruckkraft auf den Leisten 16 angedrückt wird.

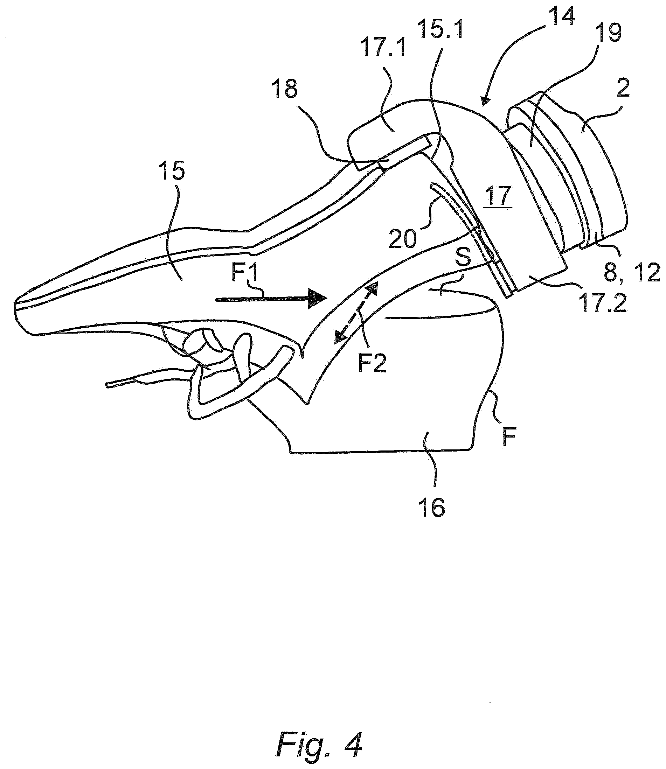

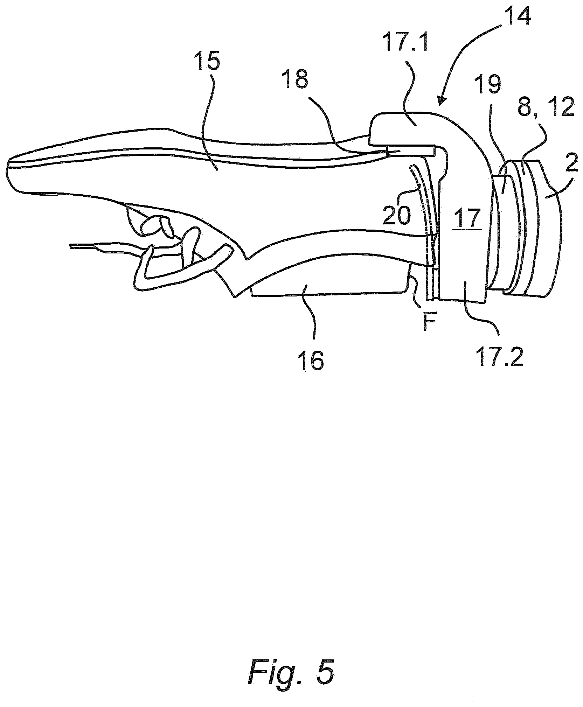

Während des Aufziehens und Andrückens des Schuhschaftes 15 in Längserstreckung des Leistens 16 wird der Schuhschaft 15 unter Verhinderung der Entstehung und des Ausübens von Querkräften F2 durch kraft-/momentgeregeltes Bewegen auf den Leisten 16 in Längserstreckung des Leistens 16 aufgezogen, bis das Fersenteil des Schuhschaftes 15 über die Übergangskante von Sohlenfläche S des Leistens 16 zu Fersenfläche F des Leistens 16 hinweggleitet, wie dies durch Fig. 4 und Fig. 5 angedeutet ist.

Nach dem Hinweggleiten des Fersenteils des Schuhschaftes 15 über die Übergangskante des Leistens 16, werden die Gelenke 11 des Roboterarms 2 derart verändert ansteuert, dass die bisherige vom Zehenende des Leistens 16 in Richtung dem Fersenende des Leistens 16 in Längserstreckung wirkende Zugkraft F1 in eine in entgegengesetzte Richtung wirkende Druckkraft F2 (Fig. 5) verändert wird, die den Schuhschaft 15 gegen die Fersenfläche F des Leistens 16 drückt, während gleichzeitig das Fersenteil des Schuhschaftes 15 entlang des Fersenendes des Leistens 16 aufgezogen wird, bis der Schuhschaft 15 vollständig auf dem Leisten 16 aufsitzt.

Das Aufnehmen des Schuhschaftes 15 durch den vom Roboterarm 2 geführten Greifer 14 kann dadurch erfolgen, dass die Robotersteuerung 13 die Gelenke 11 des Roboterarms 2 automatisch derart ansteuert, dass der Roboterarm 2 den Greifer 14 an die Hinterkappe 15.1 des Schuhschaftes 15 heranführt und der Greifer 14 den Schuhschaft 15 dadurch festhält, dass er die Hinterkappe 15.1 des Schuhschaftes 15 zwischen einer insbesondere automatisch verstellbaren Innenzunge 20 des Greifers 14 und einem am Außenhinterteil des Schuhschaftes 15 anliegendem Gegenhalter, d.h. dem langen Schenkel 17.2 des Greifers 14 einklemmt.

Im Falle des vorliegenden Ausführungsbeispiels wird der Leisten 16, auf den der Schuhschaft 15 aufgezogen wird, mit seiner Leistensohlenfläche S nach oben weisend ortsfest angeordnet, wie dies in Fig. 2 bis Fig. 5 dargestellt ist.

Die vorgegebene maximale Zugkraft die während des Aufziehens des vom Greifer 14 festgehaltenen Schuhschaftes 15 auf den Leisten 16 beginnend an dem Zehenende des Leistens 16 in Richtung dem Fersenende des Leistens 16 in Längserstreckung des Leistens 16 höchstens ausgeübt wird, wird in Abhängigkeit des Aufbaus des Schuhschaftes 15 und/oder der Materialart und/oder Materialkombination des Schuhschaftes 15 vor dem Durchführen des Aufziehens empirisch vorbestimmt.

Die vorgegebene maximale Zugkraft, die während des Aufziehens des vom Greifer 14 festgehaltenen Schuhschaftes 15 auf den Leisten 16 beginnend an dem Zehenende des Leistens 16 in Richtung dem Fersenende des Leistens 16 in Längserstreckung des Leistens 16 höchstens ausgeübt wird, kann auf einen Wert zwischen 100 Newton und 250 Newton, insbesondere zwischen 150 Newton und 210 Newton festgelegt sein.

Das Aufziehen des vom Greifer 14 festgehaltenen Schuhschaftes 15 auf den Leisten 16 in Längserstreckung des Leistens 16 kann mit einer kontinuierlich ansteigenden Zugkraft bis höchstens zur vorgegebenen maximalen Zugkraft durchgeführt werden.

Nach Erreichen der vorgegebenen maximalen Zugkraft wird im Falle des vorliegenden Ausführungsbeispiels der vom Greifer 14 festgehaltene Schuhschaft 15 weiter auf den Leisten 16 in Längserstreckung des Leistens 16 aufgezogen und zwar mit einer konstanten Zugkraft in Höhe der vorgegebenen maximalen Zugkraft.

Während des Aufziehens des Schuhschaftes 15 in Längserstreckung des Leistens 16 wird der Schuhschaft 15 mit einer zumindest im Wesentlichen senkrecht auf die Sohlenfläche S des Leistens 16 wirkenden Andruckkraft zwischen 5 und 15 Newton auf den Leisten 16 angedrückt.

Der Schuhschaft 15 wird zumindest während eines Teilabschnitts des Aufziehens des Schuhschaftes 15, welcher mindestens die der Fersenfläche F des Leistens 16 zugewandte halbe Länge der Längserstreckung des Leistens 16 umfasst, mit einer zumindest im Wesentlichen senkrecht auf die Sohlenfläche S des Leistens 16 wirkenden Andruckkraft zwischen 5 und 15 Newton auf den Leisten 16 angedrückt wird.

Während des Aufziehens und Andrückens des Schuhschaftes 15 in Längserstreckung des Leistens 16 wird ein Ausüben von Querkräften dadurch verhindert, dass durch kraft-/momentgeregeltes Ansteuern der Gelenke 11 des Roboterarms 2 durch die Robotersteuerung 13 der Greifer 14 ausschließlich in Längserstreckung des Leistens 16 bewegt wird.

Gleichzeitig kann während des Aufziehens und Andrückens des Schuhschaftes 15 in Längserstreckung des Leistens 16 ein Entstehen von Querkräften dadurch verhindert werden, dass durch kraft-/momentgeregeltes Ansteuern der Gelenke 11 des Roboterarms 1 durch die Robotersteuerung 13 der Greifer 14 in Querrichtung zur Längserstreckung des Leistens 16 seitliche Ausweichbewegungen durchführt, um die Querkräfte zumindest im Wesentlichen auf Null zu reduzieren.

Das kraft-/momentgeregelte Bewegen wird erfindungsgemäß durchgeführt, indem Messwerte eines zwischen dem Greifer 14 und dem Flansch 8 des Roboterarms 2 angeordneten Kraft-/Momentensensor 19 an die Robotersteuerung 13 zur Auswertung zugeführt werden und die geplanten Bewegungen des Greifers 14 in Abhängigkeit der Messwerte angepasst werden.

Das Aufziehen des Fersenteils des Schuhschaftes 15 entlang des Fersenendes des Leistens 16, bis der Schuhschaft 15 vollständig auf dem Leisten 16 aufsitzt, wie in Fig. 5 gezeigt, wird durchgeführt, indem die Robotersteuerung 13 den Greifer 14 in wenigstens zwei, insbesondere drei gerade verlaufenden Teilbewegungsstrecken T1, T2, T3 entlang des Fersenendes des Leistens 16 entlang bewegt.

Statt mittels gerade verlaufender Teilbewegungsstrecken T1, T2, T3 kann alternativ das Aufziehen des Fersenteils des Schuhschaftes 15 entlang des Fersenendes des Leistens 16, bis der Schuhschaft 15 vollständig auf dem Leisten 16 aufsitzt, durchgeführt wird, indem die Robotersteuerung 13 den Greifer 14 in einer einzigen bogenförmig, insbesondere kreisbogenförmig verlaufenden Gesamtbewegungsstrecke G entlang des Fersenendes des Leistens 16 bewegt.

Während des Aufziehens eines ersten Schuhschaftes 15 auf den Leisten 16 werden die während des Aufziehens des ersten Schuhschaftes 15 wirkenden Kräfte als Kraftwerte erfasst und gespeichert, und während eines folgenden Aufziehens eines weiteren Schuhschaftes 15 auf den Leisten 16 die gespeicherten Kraftwerte des Aufziehens des ersten Schuhschaftes 15 mit aktuellen Kraftwerten, die während des Aufziehens des weiteren Schuhschaftes 15 auf den Leisten 16 gemessen werden, verglichen werden, und bei Überschreitung einer vorgegebenen Maximalabweichung von gespeicherten Kraftwerten zu aktuellen Kraftwerten, das Aufziehen abgebrochen wird.

## Patentansprüche

1. Verfahren zum automatischen Aufziehen eines Schuhschaftes (15) auf einen Leisten (16) mittels eines Roboters (1), der eine Robotersteuerung (13), einen von der Robotersteuerung (13) automatisch angesteuerten Roboterarm (2), sowie ein von dem Roboterarm (2) bewegten Greifer (14) umfasst, der ausgebildet ist, einen Schuhschaft (15) zu halten, aufweisend die Schritte:
- Aufnehmen des Schuhschaftes (15) durch den vom Roboterarm (2) geführten Greifer (14), derart, dass der Greifer (14) den Schuhschaft (15) festhält,
- Aufziehen des vom Greifer (14) festgehaltenen Schuhschaftes (15) auf den Leisten (16) durch kraft-/momentgeregeltes Bewegen des Greifers (14) durch motorisches Ansteuern der Gelenke (11) des Roboterarms (2) derart, dass der Schuhschaft (15) beginnend an dem Zehenende des Leistens (16) in Richtung dem Fersenende des Leistens (16) in Längserstreckung des Leistens (16) mit einer vorgegebenen maximalen Zugkraft aufgezogen wird, wobei
- die Robotersteuerung (2) die Gelenke (11) des Roboterarms (2) derart ansteuert, dass zumindest während eines Teilabschnitts des Aufziehens des Schuhschaftes (15) in Längserstreckung des Leistens (16) der Schuhschaft (15) mit einer zumindest im Wesentlichen senkrecht auf die Sohlenfläche (S) des Leistens (16) wirkenden Andruckkraft auf den Leisten (16) angedrückt wird, und
- während des Aufziehens und Andrückens des Schuhschaftes (15) in Längserstreckung des Leistens (16) der Schuhschaft (15) unter Verhinderung der Entstehung und des Ausübens von Querkräften durch kraft-/momentgeregeltes Bewegen auf den Leisten (16) in Längserstreckung des Leistens (16) aufgezogen wird, bis das Fersenteil des Schuhschaftes (15) über die Übergangskante von Sohlenfläche (S) des Leistens (16) zu Fersenfläche (F) des Leistens (16) hinweggleitet, und
- die Robotersteuerung (13), nach dem Hinweggleiten des Fersenteils des Schuhschaftes (15) über die Übergangskante des Leistens (16), die Gelenke (11) des Roboterarms (2) derart verändert ansteuert, dass die bisherige vom Zehenende des Leistens (16) in Richtung dem Fersenende des Leistens (16) in Längserstreckung wirkende Zugkraft (F1) in eine in entgegengesetzte Richtung wirkende Druckkraft (F2) verändert wird, die den Schuhschaft (15) gegen die Fersenfläche (F) des Leistens (16) drückt, während gleichzeitig das Fersenteil des Schuhschaftes (15) entlang des Fersenendes des Leistens (16) aufgezogen wird, bis der Schuhschaft (15) vollständig auf dem Leisten (16) aufsitzt.

2. Verfahren nach Anspruch 1, **dadurch gekennzeichnet, dass** das Aufnehmen des Schuhschaftes (15) durch den vom Roboterarm (2) geführten Greifer (14) dadurch erfolgt, dass die Robotersteuerung (13) die Gelenke (11) des Roboterarms (2) automatisch derart ansteuert, dass der Roboterarm (2) den Greifer (14) an eine Hinterkappe (15.1) des Schuhschaftes (15) heranführt und der Greifer (14) den Schuhschaft (15) dadurch festhält, dass er die Hinterkappe (15.1) des Schuhschaftes (15) zwischen einer insbesondere automatisch verstellbaren Innenzunge (20) des Greifers (14) und einem am Außenhinterteil des Schuhschaftes (15) anliegendem Gegenhalter des Greifers (14) einklemmt.

3. Verfahren nach Anspruch 1 und 2, **dadurch gekennzeichnet, dass** der Leisten (16), auf den der Schuhschaft (15) aufgezogen wird, mit seiner Leistensohlenfläche (S) nach oben weisend ortsfest angeordnet ist.

4. Verfahren nach einem der Ansprüche 1 bis 3, **dadurch gekennzeichnet, dass** die vorgegebene maximale Zugkraft die während des Aufziehens des vom Greifer (14) festgehaltenen Schuhschaftes (15) auf den Leisten (16) beginnend an dem Zehenende des Leistens (16) in Richtung dem Fersenende des Leistens (16) in Längserstreckung des Leistens (16) höchstens ausgeübt wird, in Abhängigkeit des Aufbaus des Schuhschaftes (15) und/oder der Materialart und/oder Materialkombination des Schuhschaftes (15) vor dem Durchführen des Aufziehens empirisch vorbestimmt wird.

5. Verfahren nach 4, **dadurch gekennzeichnet, dass** die vorgegebene maximale Zugkraft, die während des Aufziehens des vom Greifer (14) festgehaltenen Schuhschaftes (15) auf den Leisten (16) beginnend an dem Zehenende des Leistens (16) in Richtung dem Fersenende des Leistens (16) in Längserstreckung des Leistens (16) höchstens ausgeübt wird, auf einen Wert zwischen 100 Newton und 250 Newton, insbesondere zwischen 150 Newton und 210 Newton festgelegt wird.

6. Verfahren nach Anspruch 1 bis 5, **dadurch gekennzeichnet, dass** das Aufziehen des vom Greifer (14) festgehaltenen Schuhschaftes (15) auf den Leisten (16) in Längserstreckung des Leistens (16) mit einer kontinuierlich ansteigenden Zugkraft bis höchstens zur vorgegebenen maximalen Zugkraft durchgeführt wird.

7. Verfahren nach Anspruch 6, **dadurch gekennzeichnet, dass** nach Erreichen der vorgegebenen maximalen Zugkraft der vom Greifer (14) festgehaltene Schuhschaft (15) weiter auf den Leisten (16) in Längserstreckung des Leistens (16) aufgezogen wird und zwar mit einer konstanten Zugkraft in Höhe der vorgegebenen maximalen Zugkraft.

8. Verfahren nach einem der Ansprüche 1 bis 7, **dadurch gekennzeichnet, dass** während des Aufziehens des Schuhschaftes (15) in Längserstreckung des Leistens (16) der Schuhschaft (15) mit einer zumindest im Wesentlichen senkrecht auf die Sohlenfläche (S) des Leistens (16) wirkenden Andruckkraft zwischen 5 und 15 Newton auf den Leisten (16) angedrückt wird.

9. Verfahren nach einem der Ansprüche 1 bis 8, **dadurch gekennzeichnet, dass** der Schuhschaft (15) zumindest während eines Teilabschnitts des Aufziehens des Schuhschaftes (15), welcher mindestens die der Fersenfläche des Leistens (16) zugewandte halbe Länge der Längserstreckung des Leistens (16) umfasst, mit einer zumindest im Wesentlichen senkrecht auf die Sohlenfläche (S) des Leistens (16) wirkenden Andruckkraft zwischen 5 und 15 Newton auf den Leisten (16) angedrückt wird.

10. Verfahren nach einem der Ansprüche 1 bis 9, **dadurch gekennzeichnet, dass** während des Aufziehens und Andrückens des Schuhschaftes (15) in Längserstreckung des Leistens (16) ein Ausüben von Querkräften dadurch verhindert wird, dass durch kraft-/momentgeregeltes Ansteuern der Gelenke (11) des Roboterarms (2) durch die Robotersteuerung (13) der Greifer (14) ausschließlich in Längserstreckung des Leistens (16) bewegt wird.

11. Verfahren nach einem der Ansprüche 1 bis 9, **dadurch gekennzeichnet, dass** während des Aufziehens und Andrückens des Schuhschaftes (15) in Längserstreckung des Leistens (16) ein Entstehen von Querkräften dadurch verhindert wird, dass durch kraft-/momentgeregeltes Ansteuern der Gelenke (11) des Roboterarms (2) durch die Robotersteuerung (13) der Greifer (14) in Querrichtung zur Längserstreckung des Leistens (16) seitliche Ausweichbewegungen durchführt, um die Querkräfte zumindest im Wesentlichen auf Null zu reduzieren.

12. Verfahren nach einem der Ansprüche 1 bis 11, **dadurch gekennzeichnet, dass** das kraft-/momentgeregelte Bewegen durchgeführt wird, indem Messwerte eines zwischen dem Greifer (14) und einem Flansch (8) des Roboterarms (2) angeordneten Kraft-/Momentensensor (19) an die Robotersteuerung (13) zur Auswertung zugeführt werden und die geplanten Bewegungen des Greifers (14) in Abhängigkeit der Messwerte angepasst werden.

13. Verfahren nach einem der Ansprüche 1 bis 12, **dadurch gekennzeichnet, dass** das Aufziehen des Fersenteils des Schuhschaftes (15) entlang des Fersenendes des Leistens (16), bis der Schuhschaft (15) vollständig auf dem Leisten (16) aufsitzt, durchgeführt wird, indem die Robotersteuerung (13) den Greifer (14) in wenigstens zwei, insbesondere drei gerade verlaufenden Teilbewegungsstrecken (T1, T2, T3) entlang des Fersenendes des Leistens (16) bewegt.

14. Verfahren nach einem der Ansprüche 1 bis 12, **dadurch gekennzeichnet, dass** das Aufziehen des Fersenteils des Schuhschaftes (15) entlang des Fersenendes des Leistens (16), bis der Schuhschaft (15) vollständig auf dem Leisten (16) aufsitzt, durchgeführt wird, indem die Robotersteuerung (13) den Greifer (14) in einer einzigen bogenförmig, insbesondere kreisbogenförmig verlaufenden Gesamtbewegungsstrecke (G) entlang des Fersenendes des Leistens (16) bewegt.

15. Verfahren nach einem der Ansprüche 1 bis 14, **dadurch gekennzeichnet, dass** während des Aufziehens eines ersten Schuhschaftes (15) auf den Leisten (16) die während des Aufziehens des ersten Schuhschaftes (15) wirkenden Kräfte als Kraftwerte erfasst und gespeichert werden, und während eines folgenden Aufziehens eines weiteren Schuhschaftes (15) auf den Leisten (16) die gespeicherten Kraftwerte des Aufziehens des ersten Schuhschaftes (15) mit aktuellen Kraftwerten, die während des Aufziehens des weiteren Schuhschaftes (15) auf den Leisten (16) gemessen werden, verglichen werden, und bei Überschreitung einer vorgegebenen Maximalabweichung von gespeicherten Kraftwerten zu aktuellen Kraftwerten, das Aufziehen abgebrochen wird.

## Claims

1. Method for automatically pulling a shoe upper (15) onto a last (16) by means of a robot (1) which comprises a robot controller (13), a robot arm (2) automatically actuated by the robot controller (13), and a gripper (14) which is moved by the robot arm (2) and is designed to hold a shoe upper (15), having the steps of:
- picking up the shoe upper (15) using the gripper (14) guided by the robot arm (2) such that the gripper (14) holds the shoe upper (15),
- pulling the shoe upper (15) held by the gripper (14) onto the last (16) by moving the gripper (14) under force/torque control by motorized actuation of the joints (11) of the robot arm (2) such that the shoe upper (15) is pulled, starting at the toe end of the last (16), in the direction of the heel end of the last (16) along the longitudinal extent of the last (16) with a predefined maximum pulling force, wherein
- the robot controller (2) actuates the joints (11) of the robot arm (2) such that, at least during a portion of the pulling on of the shoe upper (15) along the longitudinal extent of the last (16), the shoe upper (15) is pressed against the last (16) with a pressure force that acts at least substantially perpendicularly to the sole surface (S) of the last (16), and
- during the pulling on and pressing of the shoe upper (15) along the longitudinal extent of the last (16), the shoe upper (15) is pulled onto the last (16) along the longitudinal extent of the last (16) by being moved under force/torque control, with the occurrence and the exertion of transverse forces being prevented, until the heel part of the shoe upper (15) slides over the transition edge from the sole surface (S) of the last (16) to the heel surface (F) of the last (16), and
- the robot controller (13), after the heel part of the shoe upper (15) has slid over the transition edge of the last (16), actuates the joints (11) of the robot arm (2) in a changed manner such that the pulling force (F1) that previously acted from the toe end of the last (16) in the direction of the heel end of the last (16) along the longitudinal extent is changed into a pressing force (F2) acting in the opposite direction, which presses the shoe upper (15) against the heel surface (F) of the last (16), while at the same time the heel part of the shoe upper (15) is pulled on along the heel end of the last (16) until the shoe upper (15) is fully fitted on the last (16).

2. Method according to Claim 1, **characterized in that** the shoe upper (15) is picked up by the gripper (14) guided by the robot arm (2) **in that** the robot controller (13) automatically actuates the joints (11) of the robot arm (2) such that the robot arm (2) guides the gripper (14) up to a heel cap (15.1) of the shoe upper (15) and the gripper (14) holds the shoe upper (15) **in that** it clamps the heel cap (15.1) of the shoe upper (15) between an in particular automatically adjustable inner tongue (20) of the gripper (14) and a counter holder, bearing against an outer rear part of the shoe upper (15), of the gripper (14).

3. Method according to Claims 1 and 2, **characterized in that** the last (16) onto which the shoe upper (15) is pulled is arranged with its last sole surface (S) facing upwards in a fixed position.

4. Method according to any of Claims 1 to 3, **characterized in that** the predefined maximum pulling force that is exerted at most during the pulling of the shoe upper (15) held by the gripper (14) onto the last (16), starting at the toe end of the last (16) in the direction of the heel end of the last (16) along the longitudinal extent of the last (16), is predetermined empirically, depending on the structure of the shoe upper (15) and/or the type of material and/or the material combination of the shoe upper (15), before the pulling-on operation is carried out.

5. Method according to 4, **characterized in that** the predefined maximum pulling force that is exerted at most during the pulling of the shoe upper (15) held by the gripper (14) onto the last (16), starting at the toe end of the last (16) in the direction of the heel end of the last (16) along the longitudinal extent of the last (16), is set at a value of between 100 newtons and 250 newtons, in particular between 150 newtons and 210 newtons.

6. Method according to Claims 1 to 5, **characterized in that** the pulling of the shoe upper (15) held by the gripper (14) onto the last (16) along the longitudinal extent of the last (16) is carried out with a continuously increasing pulling force up at most to the predefined maximum pulling force.

7. Method according to Claim 6, **characterized in that**, after the predefined maximum pulling force has been achieved, the shoe upper (15) held by the gripper (14) continues to be pulled onto the last (16) along the longitudinal extent of the last (16), specifically with a constant pulling force at the level of the predefined maximum pulling force.

8. Method according to any of Claims 1 to 7, **characterized in that**, during the pulling on of the shoe upper (15) along the longitudinal extent of the last (16), the shoe upper (15) is pressed against the last (16) with a pressure force, acting at least substantially perpendicularly to the sole surface (S) of the last (16), of between 5 and 15 newtons.

9. Method according to any of Claims 1 to 8, **characterized in that** the shoe upper (15), at least during a portion of the pulling on of the shoe upper (15) which comprises at least half the length, facing the heel surface of the last (16), of the longitudinal extent of the last (16), is pressed against the last (16) with a pressure force, acting at least substantially perpendicularly to the sole surface (S) of the last (16), of between 5 and 15 newtons.

10. Method according to any of Claims 1 to 9, **characterized in that**, during the pulling on and pressing of the shoe upper (15) along the longitudinal extent of the last (16), any exertion of transverse forces is prevented **in that**, as a result of the joints (11) of the robot arm (2) being actuated under force/torque control by the robot controller (13), the gripper (14) is moved only along the longitudinal extent of the last (16).

11. Method according to any of Claims 1 to 9, **characterized in that**, during the pulling on and pressing of the shoe upper (15) along the longitudinal extent of the last (16), any occurrence of transverse forces is prevented **in that**, as a result of the joints (11) of the robot arm (2) being actuated under force/torque control by the robot controller (13), the gripper (14) carries out lateral evasive movements in the transverse direction with respect to the longitudinal extent of the last (16), in order to reduce the transverse forces at least substantially to zero.

12. Method according to any of Claims 1 to 11, **characterized in that** the movement under force/torque control is carried out **in that** measured values of a force/torque sensor (19) arranged between the gripper (14) and a flange (8) of the robot arm (2) are supplied to the robot controller (13) for evaluation, and the planned movements of the gripper (14) are adapted depending on the measured values.

13. Method according to any of Claims 1 to 12, **characterized in that** the pulling on of the heel part of the shoe upper (15) along the heel end of the last (16), until the shoe upper (15) is fully fitted on the last (16), is carried out **in that** the robot controller (13) moves the gripper (14) in at least two, in particular three straight partial movement sections (T1, T2, T3) along the heel end of the last (16).

14. Method according to any of Claims 1 to 12, **characterized in that** the pulling on of the heel part of the shoe upper (15) along the heel end of the last (16), until the shoe upper (15) is fully fitted on the last (16), is carried out **in that** the robot controller (13) moves the gripper (14) in a single curved, in particular circular arc-shaped, total movement section (G) along the heel end of the last (16) .

15. Method according to any of Claims 1 to 14, **characterized in that**, during the pulling of a first shoe upper (15) onto the last (16), the forces that act during the pulling on of the first shoe upper (15) are recorded and saved as force values, and during a subsequent pulling of a further shoe upper (15) onto the last (16), the saved force values of the pulling on of the first shoe upper (15) are compared with current force values that are measured during the pulling of the further shoe upper (15) onto the last (16), and if a predefined maximum deviation of saved force values with respect to current force values is exceeded, the pulling on is discontinued.

## Revendications

1. Procédé permettant de tirer automatiquement une tige de chaussure (15) sur un embauchoir (16) au moyen d'un robot (1) qui comprend une commande de robot (13), un bras de robot (2) commandé automatiquement par la commande de robot (13), ainsi qu'un dispositif de préhension (14) déplacé par le bras de robot (2), lequel dispositif de préhension est réalisé pour maintenir une tige de chaussure (15), présentant les étapes suivantes
- réception de la tige de chaussure (15) par le dispositif de préhension (14) guidé par le bras de robot (2), de telle sorte que le dispositif de préhension (14) retienne la tige de chaussure (15),
- traction de la tige de chaussure (15) retenue par le dispositif de préhension (14) sur l'embauchoir (16) par déplacement, régulé par force/couple, du dispositif de préhension (14) par commande motorisée des articulations (11) du bras de robot (2), de telle sorte que la tige de chaussure (15) soit tirée, en commençant à l'extrémité côté orteils de l'embauchoir (16), en direction de l'extrémité côté talon de l'embauchoir (16), dans l'étendue longitudinale de l'embauchoir (16) avec une force de traction maximale prédéfinie, dans lequel
- la commande de robot (2) commande les articulations (11) du bras de robot (2) de telle sorte qu'au moins pendant une partie de la traction de la tige de chaussure (15) dans l'étendue longitudinale de l'embauchoir (16), la tige de chaussure (15) soit pressée sur l'embauchoir (16) avec une force de pression agissant au moins sensiblement perpendiculairement à la surface de semelle (S) de l'embauchoir (16), et
- pendant la traction et la pression de la tige de chaussure (15) dans l'étendue longitudinale de l'embauchoir (16), la tige de chaussure (15) est tirée sur l'embauchoir (16) dans l'étendue longitudinale de l'embauchoir (16) par un déplacement régulé par force/couple, en empêchant la création et l'application de forces transversales, jusqu'à ce que la partie talon de la tige de chaussure (15) glisse au-delà de l'arête de transition de la surface de semelle (S) de l'embauchoir (16) par rapport à la surface de talon (F) de l'embauchoir (16), et
- la commande de robot (13), après le glissement de la partie talon de la tige de chaussure (15) au-delà de l'arête de transition de l'embauchoir (16), commande les articulations (11) du bras de robot (2) de telle sorte que la force de traction (F1) agissant précédemment dans l'étendue longitudinale à partir de l'extrémité côté orteils de l'embauchoir (16) en direction de l'extrémité côté talon de l'embauchoir (16) soit changée en une force de compression (F2) agissant en sens inverse, qui presse la tige de chaussure (15) contre la surface de talon (F) de l'embauchoir (16), pendant qu'en même temps la partie talon de la tige de chaussure (15) est tirée le long de l'extrémité côté talon de l'embauchoir (16), jusqu'à ce que la tige de chaussure (15) repose complètement sur l'embauchoir (16).

2. Procédé selon la revendication 1, **caractérisé en ce que** la réception de la tige de chaussure (15) par le dispositif de préhension (14) guidé par le bras de robot (2) s'effectue par le fait que la commande de robot (13) commande automatiquement les articulations (11) du bras de robot (2) de telle sorte que le bras de robot (2) guide le dispositif de préhension (14) devant une coiffe arrière (15.1) de la tige de chaussure (15) et que le dispositif de préhension (14) retienne la tige de chaussure (15) par le fait qu'il serre la coiffe arrière (15.1) de la tige de chaussure (15) entre une languette intérieure (20) réglable en particulier automatiquement du dispositif de préhension (14) et une contre-butée du dispositif de préhension (14), laquelle s'appuie contre la partie arrière extérieure de la tige de chaussure (15) .

3. Procédé selon les revendications 1 et 2, **caractérisé en ce que** l'embauchoir (16), sur lequel la tige de chaussure (15) est tirée, est disposé de manière fixe avec sa surface de semelle d'embauchoir (S) tournée vers le haut.

4. Procédé selon l'une des revendications 1 à 3, **caractérisé en ce que** la force de traction maximale prédéfinie qui est exercée tout au plus pendant la traction de la tige de chaussure (15) retenue par le dispositif de préhension (14) sur l'embauchoir (16) en commençant à l'extrémité côté orteils de l'embauchoir (16), en direction de l'extrémité côté talon de l'embauchoir (16), dans l'étendue longitudinale de l'embauchoir (16), est déterminée de manière empirique en fonction de la structure de la tige de chaussure (15) et/ou du type de matériaux et/ou de la combinaison de matériaux de la tige de chaussure (15) avant d'effectuer la traction.

5. Procédé selon 4, **caractérisé en ce que** la force de traction maximale prédéfinie qui est exercée tout au plus pendant la traction de la tige de chaussure (15) retenue par le dispositif de préhension (14) sur l'embauchoir (16) en commençant à l'extrémité côté orteils de l'embauchoir (16), en direction de l'extrémité côté talon de l'embauchoir (16), dans l'étendue longitudinale de l'embauchoir (16), est fixée à une valeur entre 100 Newton et 250 Newton, en particulier entre 150 Newton et 210 Newton.

6. Procédé selon les revendications 1 à 5, **caractérisé en ce que** la traction de la tige de chaussure (15) retenue par le dispositif de préhension (14) sur l'embauchoir (16) dans l'étendue longitudinale de l'embauchoir est effectuée avec une force de traction augmentant continuellement jusqu'à tout au plus la force de traction maximale prédéfinie.

7. Procédé selon la revendication 6, **caractérisé en ce qu'**une fois que la force de traction maximale prédéfinie a été atteinte, la tige de chaussure (15) retenue par le dispositif de préhension (14) est tirée davantage sur l'embauchoir (16) dans l'étendue longitudinale de l'embauchoir (16) et ce avec une force de traction constante égale à la force de traction maximale prédéfinie.

8. Procédé selon l'une des revendications 1 à 7, **caractérisé en ce que** pendant la traction de la tige de chaussure (15) dans l'étendue longitudinale de l'embauchoir (16), la tige de chaussure (15) est pressée sur l'embauchoir (16) avec une force de pression, agissant au moins sensiblement perpendiculairement à la surface de semelle (S) de l'embauchoir (16), entre 5 et 15 Newton.

9. Procédé selon l'une des revendications 1 à 8, **caractérisé en ce que** la tige de chaussure (15), au moins pendant une partie de la traction de la tige de chaussure (15), laquelle partie comprend au moins la moitié de la longueur de l'étendue longitudinale de l'embauchoir (16) tournée vers la surface de talon de l'embauchoir (16), est pressée sur l'embauchoir (16) avec une force de pression, agissant au moins sensiblement perpendiculairement à la surface de semelle (S) de l'embauchoir (16), entre 5 et 15 Newton.

10. Procédé selon l'une des revendications 1 à 9, **caractérisé en ce que**, pendant la traction et la pression de la tige de chaussure (15) dans l'étendue longitudinale de l'embauchoir (16), une application de forces transversales est empêchée par le fait que, par commande régulée par force/couple des articulations (11) du bras de robot (2) par la commande de robot (13), le dispositif de préhension (14) est déplacé exclusivement dans l'étendue longitudinale de l'embauchoir (16).

11. Procédé selon l'une des revendications 1 à 9, **caractérisé en ce que**, pendant la traction et la pression de la tige de chaussure (15) dans l'étendue longitudinale de l'embauchoir (16), une création de forces transversales est empêchée par le fait que, par commande régulée par force/couple des articulations (11) du bras de robot (2) par la commande de robot (13), le dispositif de préhension (14) effectue des déplacements d'écart latéraux dans la direction transversale par rapport à l'étendue longitudinale de l'embauchoir (16), afin de réduire les forces transversales au moins sensiblement à zéro.

12. Procédé selon l'une des revendications 1 à 11, **caractérisé en ce que** le déplacement régulé par force/couple est effectué par le fait que des valeurs de mesure d'un capteur de force/couple (19) disposé entre le dispositif de préhension (14) et une bride (8) du bras de robot (2) sont acheminées à la commande de robot (13) pour l'évaluation et les déplacements planifiés du dispositif de préhension (14) sont adaptés en fonction des valeurs de mesure.

13. Procédé selon l'une des revendications 1 à 12, **caractérisé en ce que** la traction de la partie talon de la tige de chaussure (15) le long de l'extrémité côté talon de l'embauchoir (16), jusqu'à ce que la tige de chaussure (15) repose complètement sur l'embauchoir (16), est effectuée par le fait que la commande de robot (13) déplace le dispositif de préhension (14) dans au moins deux, en particulier trois trajets de déplacement partiels (T1, T2, T3) s'étendant de manière rectiligne le long de l'extrémité côté talon de l'embauchoir (16).

14. Procédé selon l'une des revendications 1 à 12, **caractérisé en ce que** la traction de la partie talon de la tige de chaussure (15) le long de l'extrémité côté talon de l'embauchoir (16), jusqu'à ce que la tige de chaussure (15) repose complètement sur l'embauchoir (16), est effectuée par le fait que la commande de robot (13) déplace le dispositif de préhension (14) dans un trajet de déplacement global (G) unique en forme d'arc, en particulier en forme d'arc de cercle le long de l'extrémité côté talon de l'embauchoir (16).

15. Procédé selon l'une des revendications 1 à 14, **caractérisé en ce que**, pendant la traction d'une première tige de chaussure (15) sur l'embauchoir (16), les forces agissant pendant la traction de la première tige de chaussure (15) sont détectées et enregistrées en tant que valeurs de force, et pendant une traction suivante d'une autre tige de chaussure (15) sur l'embauchoir (16), les valeurs de force enregistrées de la traction de la première tige de chaussure (15) sont comparées avec des valeurs de force actuelles qui sont mesurées pendant la traction de l'autre tige de chaussure (15) sur l'embauchoir (16), et en cas de dépassement d'un écart maximal prédéfini de valeurs de force enregistrées par rapport à des valeurs de force actuelles, la traction est interrompue.
